# EUROPÄISCHE PATENTANMELDUNG

(11) **EP 4 011 829 A1**
(43) Veröffentlichungstag der Anmeldung: **15.06.2022**
(21) Anmeldenummer: 20213933.3
(22) Anmeldetag: 14.12.2020
(51) Int. Cl.: C01B 32/80

(54) **VERFAHREN ZUR HERSTELLUNG VON PHOSGEN DURCH UMSETZUNG VON POLYCHLOR-ANIONEN UND KOHLENSTOFFMONOXID**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Durch ein Verfahren, umfassend mindestens die Schritte
a) Bereitstellung eines Reaktionsraumes, enthaltend eine Komponente mit mindestens einer Polychlor-Anion haltigen Verbindung, bevorzugt mindestens einer Polychlor-Anion haltigen Verbindung in Form einer ionischen Flüssigkeit,
b) Kontaktieren von Kohlenstoffmonoxid mit der besagten Komponente im Reaktionsraum und dortige Umsetzung des Kohlenstoffmonoxids unter Bildung von Phosgenhaltigem Produkt,
c) gegebenenfalls Sammlung des Phosgens aus dem Phosgen-haltigen Produkt des Schritts b),
d) gegebenenfalls Umsetzung des Phosgens aus dem Phosgen-haltigen Produkt des Schritts b) oder des gesammelten Phosgens aus Schritt c) mit einer Phosgen-reaktiven Komponente,
lässt sich in Schritt b) ein Phosgen-haltiges Produkt darstellen, das bezogen auf dessen Gesamtgewicht weniger als 5,0 Gew.-% Cl₂ enthält.

## Beschreibung

Die Erfindung betrifft ein Verfahren zur Herstellung von Phosgen, sowie Zusammensetzungen, die in dem erfindungsgemäßen Verfahren und in dessen Ausführungsformen zum Einsatz kommen.

Üblicherweise wird Phosgen industriell durch die Umsetzung von Chlorgas und Kohlenstoffmonoxidgas bei erhöhten Temperaturen an einem speziellen Aktivkohlekatalysator unter Aufwendung von Energie, z.B. zur Kühlung der Reaktionszone und zur Temperaturerhöhung, hergestellt.

Die Handhabung des toxischen und hoch korrosiven Chlorgases für die Phosgenherstellung ist aufwendig. So benötigt der Chlorgasbehälter (Gashochdruckzylinder) einen speziell ausgewiesenen Lagerort, der gewissen Regulatorien unterlegen ist. Die mit Chlorgas befüllten Gashochdruckzylinder befinden sich unter derart hohem Gasdruck von üblicherweise etwa 7 bar, dass sie für die Chlorgasentnahme spezielle Gasdruckminderer benötigen. Zusätzlich sind korrosionsbeständige Gasleitungen sowie eine Vorrichtung zum Quenchen des überschüssigen Chlorgases notwendig. Es war daher eine Aufgabe der vorliegenden Erfindung ein Verfahren zur Bildung von Phosgen für die direkte Weiterverarbeitung von Phosgen bereitzustellen, das die Handhabung der Edukte erleichtert.

Die direkte Phosgensynthese aus Chlorgas und Kohlenstoffmonoxid über Aktivkohle als Katalysator ist stark exotherm (-107,6 kJ/mol), sodass die Installation einer intensiven Reaktionswärmeabfuhr zwangsläufig notwendig ist. Es war daher eine Aufgabe der vorliegenden Erfindung ein Verfahren zur Bildung von Phosgen für die direkte Weiterverarbeitung von Phosgen bereitzustellen, welches ohne oder mit einer reduzierten Abfuhr von Reaktionswärme auskommt.

Für die Umsetzung von Chlorgas und Kohlenstoffmonoxid ist zwangsläufig die Verwendung eines zusätzlichen Aktivkohlekatalysators notwendig. Hierfür werden im Industriemaßstab klassischerweise aufwendig befüllte, speziell angefertigte, mit Aktivkohle bestückte Rohrreaktoren verwendet. Es war daher eine Aufgabe der vorliegenden Erfindung ein Verfahren zur Bildung von Phosgen für die direkte Weiterverarbeitung von Phosgen zu entwickeln, dass ohne einen solchen Aktivkohlekatalysator auskommt.

Die direkte Phosgensynthese aus Chlorgas und Kohlenstoffmonoxid wird klassischerweise im Labormaßstab nicht durchgeführt. Will man kleinere Mengen Phosgen, i.e. weniger als 10 g, nutzen, z.B. für chemische Reaktionen mit Phosgen als Edukt im Labormaßstab und dieses Phosgen direkt mittels Phosgensynthese im Labormaßstab herstellen, erweisen sich die herkömmlichen Synthesewege über eine Umsetzung von Chlorgas mit Kohlenstoffmonoxid als zu aufwendig und daher nicht praktikabel. Es war daher eine Aufgabe der vorliegenden Erfindung ein Verfahren zur Bildung von Phosgen für die direkte Weiterverarbeitung in Mengen für den Labormaßstab bereitzustellen.

In der Patentanmeldung WO 2012/130803 A1 wurde beschrieben, dass sich spezielle ionische Flüssigkeiten als Chlorgasabsorber eignen, welche in einem Aufarbeitungsschritt eines Syntheseverfahrens in einer Rektifikationskolonne überschüssiges Chlor aus einem Rohprodukt einer Synthese abtrennen können. Das absorbierte Chlorgas soll durch Einleiten eines zusätzlichen Gases, z.B. Kohlenstoffmonoxid, ausgetrieben (gestrippt) werden, wobei die nach Austreibung des Chlorgases erhaltene Gasmischung, z.B. eine Mischung aus Cl₂ und Kohlenstoffmonoxid, einer klassischen Phosgensynthese zugeführt und dort umgesetzt werden soll.

Es wurde nun gefunden, dass die Umsetzung von Kohlenstoffmonoxidgas mit mindestens einer Polychlor-Anion haltigen Verbindung gemäß nachfolgend beschriebenem Verfahren eine direkte Darstellungsmethode von Phosgen bietet, welche die zuvor erwähnten Aufgaben löst.

Ein Gegenstand der vorliegenden Erfindung ist daher ein Verfahren zur Herstellung von Phosgen, umfassend mindestens die Schritte
a) Bereitstellung eines Reaktionsraumes, enthaltend eine Komponente mit mindestens einer Polychlor-Anion haltigen Verbindung, bevorzugt mindestens einer Polychlor-Anion haltigen Verbindung in Form einer ionischen Flüssigkeit,
b) Kontaktieren von Kohlenstoffmonoxid mit der besagten Komponente im Reaktionsraum und dortige Umsetzung des Kohlenstoffmonoxids unter Bildung von Phosgen-haltigem Produkt,
c) gegebenenfalls Sammlung des Phosgens aus dem Phosgen-haltigen Produkt des Schritts b),
d) gegebenenfalls Umsetzung des Phosgens aus dem Phosgen-haltigen Produkt des Schritts b) oder des gesammelten Phosgens aus Schritt c) mit einer Phosgen-reaktiven Komponente,
mit der Maßgabe, dass das in Schritt b) gebildete Phosgen-haltige Produkt bezogen auf dessen Gesamtgewicht weniger als 5,0 Gew.-% Cl₂, bevorzugt weniger als 3 Gew.-%, besonders bevorzugt weniger als 2 Gew.-%, enthält.

Ein "Reaktionsraum" ist ein Volumen, in dem die an einer chemischen Reaktion beteiligten Reaktionspartner zusammengebracht werden und in dem die chemische Reaktion stattfindet. Dies kann für eine chemische Reaktion mit Polychlor-Anion beispielsweise das Volumen eines Gefäßes sein, in dem sich Polychlor-Anion und dessen Reaktionspartner, hier Kohlenstoffmonoxid, gemeinsam befinden.

Eine "Reaktionszone" ist der Teil des Reaktionsraumes, in dem die chemische Reaktion abläuft.

Ein Stoff (bzw. eine Zusammensetzung) ist "flüssig", wenn er bei 20°C und 1013 mbar im flüssigen Aggregatzustand vorliegt. Ein Stoff (bzw. eine Zusammensetzung) ist "festförmig", wenn er bei 20°C und 1013 mbar im festen Aggregatzustand vorliegt. Ein Stoff (bzw. eine Zusammensetzung) ist "gasförmig", wenn er bei 20°C und 1013 mbar im als Gas vorliegt.

Ein Stoff ist "organisch", wenn seine chemische Struktur mindestens eine kovalente Kohlenstoff-Wasserstoff-Bindung enthält.

Das erfindungsgemäße Verfahren wird derart durchgeführt, dass die Polychlor-Anion haltige Verbindung und das Kohlenstoffmonoxid in dem Reaktionsraum bereits zu einem Phosgen-haltigen Produkt umgesetzt werden, welches bezogen auf sein Gesamtgewicht weniger als 5 Gew.-% Cl₂ enthält. Die Reaktionsführung ist derart, dass das in den Reaktionsraum eingebrachte Kohlenstoffmonoxid nicht wie in WO 2012/130803 A1 beschrieben wie ein Strippgas fungiert, in dem es Chlor umfänglich aus der Polychlor-Anion haltigen Verbindung im Reaktionsraum austreibt und dadurch eine Gasmischung aus Kohlenstoffmonoxid und Chlor erhalten und die Polychlor-Anionkonzentration im Reaktionsraum abgebaut wird, sondern dass das Kohlenstoffmonoxid derart in den Reaktionsraum eingebracht wird, dass das Polychlor-Anion im Reaktionsraum intakt bleibt und nicht Chlorgas freigibt, wodurch eine ausreichende Menge Polychlor-Anion der chemischen Umsetzung mit dem Kohlenmonoxid im Reaktionsraum zur Verfügung steht und zu Phosgen umgesetzt wird ("dortige Umsetzung"). Vorzugsweise geeignete Ausführungsformen von Schritten dieser dortigen Umsetzung werden zu einem späteren Zeitpunkt weiter unten beschrieben.

In dem erfindungsgemäßen Verfahren wird im Schritt a) eine Komponente mit mindestens einer Polychlor-Anion haltigen Verbindung bereitgestellt. Dabei ist es bevorzugt, wenn das Kation der Polychlor-haltigen Verbindung ausgewählt wird aus der Gruppe einer oder mehrerer jeweils unterschiedlich alkyl- und/oder aryl- substituierter Kationen ausgewählt aus Ammonium-, Phosphonium-, Sulfonium-, Imidazolium-, Pyrrolidinium-, Piperidinium-, Pyridinium- oder Guanidiniumkationen oder Mischungen daraus und das Polychlor-Anion Cl₍ᵣ₊₂₎⁻ enthalten ist, worin r für eine ungerade ganze Zahl von 1 bis 7, bevorzugt für 1 oder 3, steht. Alkylsubstitution im Sinne der Erfindung ist insbesondere die Substitution mit C₁- bis C₆-Alkyl-bevorzugt C₁ bis C₃-Substituenden (Methyl-, Ethyl, n-Propyl- und Isopropyl-Substitution), Arylsubstitution ist insbesondere die Substitution mit C₅- bis C₆- Aryl-Substituenten. Die Aryl-Substituenten können gegebenenfalls verschiedene Heteroatome, wie zum Beispiel Sauerstoff, Schwefel, Stickstoff, Fluor oder Chlor enthalten.

Besonders bevorzugt wird besagtes Kation aus der Gruppe der jeweils unterschiedlich alkyl- und/oder aryl-substituierten Ammoniumkationen oder Phosphoniumkationen ausgewählt.

Potenziell als Kation für besagte Polychlor-Anion haltige Verbindung des neuen Verfahrens geeignet sind die nachfolgend genannten, z.T. literaturbekannten einfachen Kationen, der Liste:
1,2,3-Trimethylimidazolium, 1,3,4,5-Tetramethylimidazolium, 1,3,4-Dimethylimidazolium, 1,3,4-Trimethylimidazolium, 1,3-Dibutyl-2-methylimidazolium, 1,3-Dibutylimidazolium, 1,2-Dimethylimidazolium, 1,3-Dimethylimidazolium, 1-Benzyl-3-methylimidazolium, 1-Butyl-2,3-dimethylimidazolium, 1-Butyl-2-ethyl-5-methylimidazolium, 1-Butyl-2-ethylimidazolium, 1-Butyl-2-5 methylimidazolium, 1-Butyl-3,4,5-trimethylimidazolium, 1-Butyl-3,4-dimethylimidazolium, 1-Butyl-3-ethylimidazolium, 1-Butyl-3-methylimidazolium, 1-Butyl-4-methylimidazolium, 1-Butylimidazolium, 1-Decyl-3-methylimidazolium, 1-Dodecyl-3-methylimidazolium, 1-Ethyl-2,3-dimethylimidazolium, 1-Ethyl-3-methylimidazolium, 1-Hexadecyl-2,3-dimethylimidazolium, 1-Hexadecyl-3-methylimidazolium, 1-Hexyl-2,3-dimethylimidazolium, 1-Hexyl-3-methylimidazolium, 1-Methyl-2-ethylimidazolium, 1-Methyl-3-octylimidazolium, 1-Methylimidazolium, 1-Pentyl-3-methylimidazolium, 1-Phenylpropyl-3-methylimidazolium, 1-Propyl-2,3-dimethylimidazolium, 1-Tetradecyl-3-methylimidazolium, 2,3-Dimethylimidazolium, 2-Ethyl-3,4-dimethylimidazolium, 3,4-Dimethylimidazolium,
Trimethylsulfonium, Triethylsulfonium, Diethylmethylsulfonium, Ethyldimethylsulfonium, Methyl(diphenyl)sulfonium, Ethyl(diphenyl)sulfonium triphenylsulfonium, Tris(4-tert-butylphenyl) sulfonium,
1-Butyl-1-methylpyrollidinium, 1-Propyl-1-methylpyrollidinium, 1-Propyl-1-ethylpyrollidinium, 1-Ethyl-1-methylpyrollidinium, 1-Diethylpyrollidinium, 1-Dimethylpyrollidinium,
1-Butyl-1-methylpiperidinium, 1-Propyl-1-methylpiperidinium, 1-Propyl-1-ethylpiperidinium, 1-Ethyl-1-methylpiperidinium, 1-Diethylpiperidinium, 1-Dimethylpiperidinium, 1,2-Dimethylpyridinium, 1-Butyl-2-ethyl-6-methylpyridinium, 1-Butyl-2-ethylpyridinium, 1-Butyl-2-methylpyridinium, 1-Butyl-3,4-dimethylpyridinium, 1-Butyl-3,5-dimethylpyridinium, 1-Butyl-3-ethylpyridinium, 1-Butyl-3-methylpyridinium, 1-Butyl-4-methylpyridinium, 1-Butylpyridinium,1-Ethylpyridinium, 1-Hexyl-3-methylpyridinium, 1-Hexyl-4-methylpyridinium, 1-Hexylpyridinium, 1-Methylpyridinium, 1-Octylpyridinium, 2-Ethyl-1,6-dimethylpyridinium, 2-Ethyl-1-methylpyridinium, 4-Methyl-1-octylpyridinium, 1,1-Dimethylpyrrolidinium, 1-Butyl-1-ethylpyrrolidinium, 1-Butyl-1-methylpyrrolidinium, 1-Ethyl-1-methylpyrrolidinium, 1-Ethyl-3-methylpyrrolidinium, 1-Hexyl-1-methylpyrrolidinium, 1-Octyl-lmethylpyrrolidinium,
Guanidinium, Hexamethylguanidinium, N,N,N' ,N'-Tetramethyl-N"-ethylguanidinium, N-Pentamethyl-N-isopropylguanidinium, N-Pentamethyl-N-propylguanidinium,
Benzyltriphenylphosphonium, Tetrabutylphosphonium, Trihexyl(tetrndecyl)phosphonium, Triisobutyl(methyl)phosphonium,
Butyltrimethylammonium, Methyltrioctylammonium, Octyltrimethylammonium, Tetrabutylammonium, Tetrapropylammonium, Tetraethylammonium, Tetramethylammonium und/oder Tributylmethylammonium.
Im Rahmen einer Ausführungsform der Erfindung enthält die Komponente aus Schritt a) mindestens eine Polychlor-Anion haltige Verbindung der Formel (III) oder der Formel (IV) oder ein Gemisch daraus,

   N-R¹ₘR²ₙR³ₒ⁺ Cl₍ᵣ₊₂₎⁻ (III)

   P-R⁴ₚR⁵_{q}⁺ Cl₍s₊₂₎⁻ (IV)
in denen
die Reste R¹, R², R³, R⁴ und R⁵ unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, oder n-Propyl, bedeuten,
mit der Maßgabe, dass mindestens ein Rest aus R¹, R² oder R³ von den jeweils anderen Resten R¹, R² und R³ verschieden ist und die Reste R⁴ und R⁵ voneinander verschieden sind,
m, n, o, p und q unabhängig voneinander für eine ganze Zahl aus der Reihe von 0 bis 4 stehen, wobei die Summe von m+n+o und die Summe von p+q die Zahl 4 ergeben muss,
wobei r und s unabhängig voneinander für eine ungerade ganze Zahl von 1 bis 7, bevorzugt r und s unabhängig voneinander für 1 oder 3, stehen.

Es hat sich als besonders vorteilhaft herausgestellt, wenn gemäß Verbindung der allgemeinen Formel (III) m und n für eine Zahl 1, 2 oder 3, und o für die 0 stehen.

Es hat sich als für das erfindungsgemäße Verfahren besonders geeignet herausgestellt, wenn die Verbindung der Formel (III) oder (IV) ausgewählt ist aus wenigstens einer Verbindung der Reihe: NEtMe₃Cl₍ᵣ₊₂₎, NEt₂Me₂Cl₍ᵣ₊₂₎, NEt₃MeCl₍ᵣ₊₂₎, NBuEt₂MeCl₍ᵣ₊₂₎, NMePr₃Cl₍ᵣ₊₂₎, NBu₂Me₂Cl₍ᵣ₊₂₎, PEt₃MeCl₍ᵣ₊₂₎, wobei die Kürzel Me, Et, Pr, Bu für Methyl, Ethyl, n-Propyl und n-Butyl stehen, worin r für eine ungerade ganze Zahl von 1 bis 7, bevorzugt für 1 oder 3, steht.

Es ist ferner wiederum besonders bevorzugt die Verbindung der Formel (III) auszuwählen aus wenigstens einer Verbindung der Reihe: NEtMe₃Cl₍ᵣ₊₂₎, NEt₂Me₂Cl₍ᵣ₊₂₎, NEt₃MeCl₍ᵣ₊₂₎, r für eine ungerade ganze Zahl von 1 bis 7, bevorzugt für 1 oder 3, steht.

Die Polychlor-Anion haltige Verbindung aus besagter Komponente des erfindungsgemäßen Verfahrens wird effektiv durch Umsetzung von Chlor (Ch) mit mindestens einer ionischen organischen Verbindung erhalten, wobei das Kation der ionischen organischen Verbindung ausgewählt wird aus der Gruppe einer oder mehrerer jeweils unterschiedlich alkyl- und/oder aryl- substituierter Kationen ausgewählt aus Ammonium-, Phosphonium-, Sulfonium-, Imidazolium-, Pyridinium- oder Guanidiniumkationen oder Mischungen daraus (bevorzugt aus der Gruppe der jeweils unterschiedlich alkyl- und/oder aryl-substituierten Ammoniumkationen oder Phosphoniumkationen) und das Anion der ionischen organischen Verbindung Monochlorid ist.

Im Rahmen einer Ausführungsform des neuen Verfahrens wird die Polychlor-Anion haltige Verbindung durch Umsetzung von Chlor (Cl₂) mit mindestens einer ionischen organischen Verbindung der allgemeinen Formel (I) und/oder (II) erhalten,
(I) N-R¹ₘR²ₙR³ₒ⁺ Cl⁻
(II) P-R⁴ₚR^{s}_{q}⁺ Cl⁻,
bevorzugt eine ionische Verbindung der allgemeinen Formel (I),
in welchen Formeln (I) und (II) die Reste R¹, R², R³, R⁴ und R⁵ unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, iso-Propyl oder n-Propyl bedeuten, und jedoch einschränkend mindestens ein Rest R¹, R² oder R³ von den jeweils anderen Resten R¹, R² und R³ verschieden ist und die Reste R⁴ und R⁵ voneinander verschieden sind,
wobei die Zeichen m, n, o, p und q unabhängig voneinander für eine ganze Zahl aus der Reihe von 0 bis 3 stehen, wobei die Summe von m+n+o und die Summe von p+q die Zahl 4 ergeben muss.

Besonders bevorzugt stehen in der Verbindung der allgemeinen Formel (I) die Zeichen m und n für die 1, 2, 3 und o für die 0.

Besonders bevorzugt wird mindestens eine ionische organische Verbindung eingesetzt, aus wenigstens einer Verbindung der Reihe: NEtMe₃Cl, NEt₂Me₂Cl, NEt₃MeCl, NMePr₃Cl, PEt₃MeCl.

Ganz besonders bevorzugt wird zur Bereitstellung von Polychlor-Anion haltiger Verbindung die Verbindung (I) ausgewählt aus wenigstens einer Verbindung der Reihe: NEtMe₃Cl, NEt₂Me₂Cl, NEt₃MeCl.

In dem erfindungsgemäßen Verfahren werden im Schritt a) bevorzugt flüssige Komponenten (bei 1013 mbar und 20°C), enthaltend mindestens eine Polychlor-Anion haltige Verbindung, eingesetzt. Dabei ist es besonders bevorzugt, wenn die Polychlor-Anion haltige Verbindung eine ionische Flüssigkeit ist. Eine weitere Möglichkeit zur Bereitstellung einer flüssigen Komponente des Schritts a) ist, der Einsatz von flüssigen, organischen Lösungsmitteln als flüssige Zusammensetzung, in denen sich die besagte Polychlor-Anion haltige Verbindung einarbeiten lässt, unter Erhalt einer Lösung oder Dispersion. Ebenso bevorzugt können als Komponente des Schritts a) mindestens eine Polychlor-Anion-haltige Verbindung in Form einer ionischen Flüssigkeit und zusätzlich eine weitere damit in Kontakt stehende flüssige Zusammensetzung in Form einer flüssigen Phase im Reaktionsraum bereitgestellt werden. Unter einer "Phase" wird erfindungsgemäß ein Stoff oder ein Stoffgemisch verstanden, das mit einem anderen Stoff oder Stoffgemisch in Kontakt steht und eine Phasengrenze ausbildet. Eine Phasengrenze ist eine Bezeichnung für Flächen, die zwei nicht miteinander vermischte Phasen voneinander trennen; beispielsweise die trennenden Flächen zwischen den Phasen flüssig-fest, flüssig-flüssig, fest-fest, festgasförmig oder flüssig-gasförmig. Weitere Ausführungsformen entsprechender Schritte des erfindungsgemäßen Verfahrens, in denen organische Lösungsmittel enthaltende flüssige Zusammensetzungen als Lösungsmittel besagter Polychlor-Anion-haltigen Verbindung der Komponente des Schritts a) oder als davon separate flüssige Phase fungieren, sind später genauer beschrieben.

Im Schritt b) des erfindungsgemäßen Verfahrens wird die Komponente des Schritts a) mit Kohlenmonoxid kontaktiert und unter Erhalt eines Phosgen-haltigen Produktes im Reaktionsraum umgesetzt.

Die Umsetzung mit Kohlenstoffmonoxid im Schritt b) läuft besonders effektiv ab, wenn die Komponente des Schrittes a) bezogen auf ihr Gesamtgewicht mindestens 50 Gew.-% Verbindungen mit Polychlor-Anion enthält. Vorzugsweise enthält daher besagte Komponente des Schrittes a) bezogen auf das Gesamtgewicht dieser Komponente mindestens 50 Gew.-%, bevorzugt mindestens 75 Gew.-%, ganz besonders bevorzugt mindestens 90 Gew.-%, Verbindungen mit Polychlor-Anion.

Für die Umsetzung des Kohlenstoffmonoxids unter Bildung von Phosgen-haltigem Produkt gemäß Schritt b) des erfindungsgemäßen Verfahrens erwies es sich als besonders geeignet, wenn das Stoffmengenverhältnis der in Schritt b) für die Umsetzung bereitgestellten gesamten Menge an Kohlenstoffmonoxid zur in Schritt a) bereitgestellten Polychlor-Anion haltigen Verbindung (i.e. Stoffmenge von Kohlenstoffmonoxid dividiert durch Stoffmenge in a) bereitgestellter Polychlor-Anion haltiger Verbindung) mindestens 1, bevorzugt größer 1, besonders bevorzugt größer 1.25, ganz besonders bevorzugt größer 1.5, ist. Für die Umsetzung des Kohlenstoffmonoxids unter Bildung von Phosgen-haltigem Produkt gemäß Schritt b) des erfindungsgemäßen Verfahrens erwies es sich als besonders geeignet, wenn das Stoffmengenverhältnis der in Schritt b) für die Umsetzung bereitgestellten gesamten Menge an Kohlenstoffmonoxid zur in Schritt a) bereitgestellten Polychlor-Anion haltigen Verbindung höchstens 100, bevorzugt höchstens 50, besonders bevorzugt höchstens 25, ganz besonders bevorzugt höchstens 10, am bevorzugtesten höchstens 5, ist. Ein Bereich von 1 bis 100, bevorzugt von größer 1 bis 100, besonders bevorzugt von größer 1 bis 50, weiter bevorzugt von größer 1 bis 25, weiter bevorzugt von größer 1 bis 10, weiter bevorzugt von größer 1 bis 5, ganz besonders bevorzugt von größer 1.25 bis 50, weiter bevorzugt von 1.25 bis 25, weiter bevorzugt von 1.25 bis 10, weiter bevorzugt von 1.25 bis 5, noch weiter bevorzugt von größer 1.5 bis 25, weiter bevorzugt von größer 1.5 bis 10, am bevorzugtesten von größer 1.5 bis 5, jeweils des in Schritt b) für die Umsetzung bereitgestellten besagten Stoffmengenverhältnisses der bereitgestellten Gesamtmenge an Kohlenstoffmonoxid und eingesetzter Polychlor-Anion haltiger Verbindung eignen sich besonders gut.

Üblicherweise werden für die Phosgenherstellung mittels klassischer Phosgensynthese zur Bereitstellung der notwendigen Energie Temperaturen von bis zu 500°C benötigt. Es hat sich für das erfindungsgemäße Verfahren gezeigt, dass die für die Reaktion aufzuwendende Energie geringer ist. Daher wird in einer bevorzugten Ausführungsform der Erfindung der Schritt b) bei Temperaturen < 500 °C, bevorzugt < 250 °C, weiter bevorzugt < 150°C, besonders bevorzugt bei < 100 °C, weiter bevorzugt < 80°C, ganz besonders bevorzugt < 50 °C, am bevorzugtesten < 30 °C, durchgeführt.

Die gemäß Schritt b) erfolgende Einleitung des Kohlenstoffmonoxids in den Reaktionsraum kann durch direktes Einleiten des gasförmigen Kohlenstoffmonoxides in die besagte Komponente mit mindestens einer Polychlor-Anion haltigen Verbindung, beispielsweise über eine Düse oder ein Rohr oder eine Fritte, erfolgen. Das gasförmige Kohlenstoffmonoxid kann ebenso als gasförmige Phase in den Reaktionsraum ohne Durchleitung durch besagte Komponente eingebracht werden. In beiden Fällen bildet sich im Reaktionsraum im Laufe der Umsetzung eine Zusammensetzung, enthaltend in einer flüssigen Phase mindestens eine Polychlor-Anion haltige Verbindung, und eine mit der flüssigen Phase in Kontakt stehende gasförmige Phase, enthaltend Kohlenstoffmonoxid und Phosgen.

Im Rahmen einer Ausführungsform der Erfindung kann Schritt b) derart durchgeführt werden, dass die für die dortige Umsetzung vorgesehene Menge an Kohlenstoffmonoxid derart in den Reaktionsraum geführt wird, dass dabei im Reaktionsraum eine Druckerhöhung bewirkt wird. Folglich sieht eine Ausführungsform des erfindungsgemäßen Verfahrens vor, dass in Schritt b) das Kohlenstoffmonoxid in den Reaktionsraum eingebracht wird, so dass der Innendruck des Reaktionsraumes höher ist als der Atmosphärendruck, und das Kohlenstoffmonoxid mit der besagten Komponente kontaktiert wird. Dabei ist es weiterhin vorteilhaft, die Kontaktdauer des Kohlenstoffmonoxids mit der besagten Komponente entsprechend zu wählen, bis kein Druckabfall im Reaktionsraum mehr zu verzeichnen ist.

Eine weitere Ausführungsform des erfindungsgemäßen Verfahrens sieht vor, dass die für die dortige Umsetzung vorgesehene Menge an gasförmigem Kohlenstoffmonoxid in den Reaktionsraum eingebracht und direkt in die besagte Komponente mit mindestens einer Polychlor-Anion haltigen Verbindung eingeleitet wird, wobei die im Reaktionsraum befindliche, gasförmige, Kohlenstoffmonoxid-haltige Phase im Kreislauf geführt und wiederholt in die besagte Komponente eingeleitet wird.

Ebenso kann für eine dortige Umsetzung ein Strom an gasförmigem Kohlenstoffmonoxid in den Reaktionsraum eingebracht und mit der besagten Komponente mit mindestens einer Polychlor-Anion haltigen Verbindung kontaktiert werden und Restgas aus dem Reaktionsraum ohne Rückführung in den Reaktionsraum abgeführt werden, wobei es bei dieser Durchströmung des Reaktionsraumes mit gasförmigem Kohlenstoffmonoxid bevorzugt ist, wenn das in Schritt b) gebildete Phosgen-haltige Produkt entweder im Reaktionsraum verbleibt oder nach der Herausführung in Schritt c) gesammelt wird.

Generell kann für das erfindungsgemäße Verfahren der Verbleib des im Schritt b) gebildeten Phosgen-haltigen Produktes im Reaktionsraum oder die Herausführung des Phosgen-haltigen Produkts aus dem Reaktionsraum vorgesehen sein.

Für den Fall, dass das Phosgen-haltige Produkt im Reaktionsraum verbleibt, ist eine Ausführungsform des erfindungsgemäßen Verfahrens dadurch gekennzeichnet, dass das in Schritt b) gebildete Phosgen-haltige Produkt in die Gasphase übergeht und während der Umsetzung des Kohlenstoffmonoxids an der besagten Komponente im Reaktionsraum verbleibt.

Eine weitere Ausführungsform des erfindungsgemäßen Verfahrens kann einen Übergang des Phosgen-haltigen Produktes in die Gasphase vorsehen, wobei dann dieses in der Gasphase befindliche Phosgen-haltige Produkt aus dem Reaktionsraum herausgeführt und außerhalb des Reaktionsraumes gesammelt wird, beispielsweise durch Kondensation des Phosgens oder durch Lösung des Phosgens in einer flüssigen Zusammensetzung, enthaltend flüssiges Lösungsmittel, z.B. einem organischen Lösungsmittel, wie beispielsweise Toluol, 1,2-Dichlorbenzol, 1,4-Dichlorbenzol, Monochlorbenzol, Fluorbenzol, 1,2-Difluorbenzol, Dichlormethan oder Mischungen daraus. Ein bevorzugtes erfindungsgemäßes Verfahren ist somit dadurch gekennzeichnet, dass das in Schritt b) gebildete Phosgen-haltige Produkt aus dem Reaktionsraum herausgeführt wird und das darin enthaltene in Schritt b) gebildete Phosgen in Schritt c) außerhalb des Reaktionsraumes gesammelt wird, bevorzugt durch Kondensation oder durch Lösung in organischem Lösungsmittel.

Es ist jedoch ebenso der Fall erfindungsgemäß, bei dem das Phosgen-haltige Produkt im Reaktionsraum verbleibt und dort in eine flüssige Zusammensetzung, enthaltend organisches Lösungsmittel, aufgenommen wird. Somit ist ein erfindungsgemäßes Verfahren bevorzugt, in dem das in Schritt b) gebildete Phosgen des Phosgen-haltigen Produktes in Schritt c) in einer flüssigen Zusammensetzung, enthaltend organisches Lösungsmittel, gelöst und dadurch gesammelt wird, wobei die besagte flüssige Zusammensetzung im Reaktionsraum ist. Dabei ist es vorteilhaft, wenn bereits während der Umsetzung in Schritt b) die besagte flüssige Zusammensetzung im Reaktionsraum ist und mit der Komponente, enthaltend mindestens eine Polychlor-Anion haltige Verbindung in Kontakt steht. Dabei kann die flüssige Zusammensetzung eine Phasengrenze zur Komponente aus Schritt a) ausbilden oder die Komponente aus Schritt a) wird darin gelöst. Um eine Verdampfung des gebildeten Phosgens zu verringern und den Verbleib des Phosgens in der flüssigen Zusammensetzung zu erhöhen, kann besagte flüssige organische Zusammensetzung auf 0 bis 10°C gekühlt werden.

Das bei der Umsetzung im Schritt b) gebildete Phosgen-haltige Produkt kann direkt in die organisches Lösungsmittel enthaltende flüssige Zusammensetzung (optional in Form einer flüssigen Phase) übergehen und gesammelt werden. Eine Ausführungsform des erfindungsgemäßen Verfahrens gekennzeichnet sich folglich dadurch, dass in der flüssigen Zusammensetzung (insbesondere in der flüssigen Phase) mindestens ein organisches Lösungsmittel enthalten ist, in dem sich Phosgen bei 20°C und 1013 mbar zu mindestens 1 g/L löst, bevorzugt zu mindestens 100 g/L löst, besonders bevorzugt zu mindestens 250 g/L löst.

Bevorzugt ist folglich ein erfindungsgemäßes Verfahren, worin in Schritt b) im Reaktionsraum neben besagter mindestens eine Polychlor-Anion haltigen Verbindung enthaltenden Komponente zusätzlich eine flüssige Phase, enthaltend organisches Lösungsmittel, vorliegt, wobei besagte flüssige Phase mit besagter Komponente in Kontakt steht. Diese flüssige Phase kann bereits gemeinsam mit der besagten Polychlor-Anion haltigen Verbindung enthaltenden Komponente aus Schritt a) im Schritt a) unter Ausbildung von zwei Phasen bereitgestellt werden. Die Auswahl des Lösungsmittels ist im Rahmen dieser Ausführungsform derart, dass sich die eingesetzte Menge an Polychlor-Anion haltiger Verbindung nicht vollständig in dem organischen Lösungsmittel löst. Hierzu erwies es sich als günstig, die besagte flüssige Phase derart auszuwählen, dass sich die Polychlor-Anion haltige Verbindung darin bei 20°C und 1013 mbar zu weniger als 0,1 g/L, insbesondere zu weniger als 0,01 g/L, löst.

Vor der Umsetzung mit Kohlenstoffmonoxid enthält die in Schritt b) eingesetzte besagte flüssige Zusammensetzung,(insbesondere die in Schritt b) eingesetzte flüssige Phase) bezogen auf deren Gesamtgewicht vorzugsweise eine Gesamtmenge von mindestens 50 Gew.-%, bevorzugt mindestens 75 Gew.-%, ganz besonders bevorzugt mindestens 90 Gew.-%, organisches Lösungsmittel. Als geeignet haben sich insbesondere flüssige Zusammensetzungen herausgestellt, die organisches Lösungsmittel enthalten, das mit Polychlor-Anion haltigen Verbindungen, insbesondere bei den im erfindungsgemäßen Verfahren gewählten Reaktionsbedingungen (z.B. bezüglich Druck und Temperatur), keine chemische Reaktion eingeht, i.e. ein gegenüber Polychlor-Anion haltigen Verbindungen inertes Lösungsmittel darstellt. Es hat sich daher als bevorzugt erwiesen, wenn besagtes organisches Lösungsmittel aprotisch ist. Unter einem "aprotischen Lösungsmittel" versteht der Fachmann solche flüssigen, organischen Verbindungen, die als solche niedrige E_{T}^{N}-Werte (0,0-0,4; E_{T}^{N} = normalisierte Werte der empirischen Parameter der Lösemittelpolarität wie definiert in: Reichardt, C., Solvents and Solvent Effects in Organic Chemistry, 3. Aufl.; Wiley-VCH: Weinheim, (2003) aufweisen.

Besonders bevorzugte organische Lösungsmittel werden ausgewählt aus aprotischen, organischen Verbindungen mit mindestens einem Halogenatom, ausgewählt aus Chlor, Fluor, insbesondere 1,2-Dichlorbenzol, 1,4-Dichlorbenzol, Monochlorbenzol, Fluorbenzol, 1,2-Difluorbenzol, Dichlormethan oder Mischungen daraus, enthalten.

Es ist erfindungsgemäß bevorzugt, wenn im Schritt a) des erfindungsgemäßen Verfahrens im Reaktionsraum ein Gemisch von mindestens einer Polychlor-Anion haltigen Verbindung und mindestens einem organischen Lösungsmittel vorgelegt wird, in dem bezogen auf das Gesamtgewicht aller Polychlor-Anion-haltigen Verbindungen und aller organischen Lösungsmittel organisches Lösemittel in einer Gesamtmenge von höchstens 50 Gew.-%, besonders bevorzugt von höchstens 45 Gew.-%, weiter bevorzugt von höchstens 40 Gew.-%, enthält.

Bei der dortigen Umsetzung der Polychlor-Anion haltigen Verbindung mit Kohlenstoffmonoxid bildet sich unter anderem eine Monochlor-Anion haltige Verbindung, insbesondere mindestens eine ionische organische Verbindung ausgewählt aus der zuvor genannten allgemeinen Formel (I) oder (II). Um eine besonders gute Abtrennung dieser Monochlor-Anion haltigen Verbindung aus dem Produktgemisch zu gewährleisten hat es sich als besonders geeignet herausgestellt, in den Schritten a) und b) eine solche flüssige Zusammensetzung, enthaltend mindestens ein organisches Lösungsmittel einzusetzen, in der sich die ionische organische Verbindung NMeEt₃Cl bei 20°C und 1013 mbar zu weniger als 0,1 g/L, insbesondere zu weniger als 0,05 g/L, löst. Die abgetrennte Monochlor-Anion haltige Verbindung kann wie oben beschrieben wieder mit Cl₂ zur Bereitstellung besagter Polychlor-Anion haltigen Verbindung umgesetzt werden.

Das durch das erfindungsgemäße Verfahren im besagten Reaktionsraum erhaltene Phosgen des in Schritt b) gebildeten Phosgen-haltigen Produkts kann im besagten Reaktionsraum mit mindestens einer Phosgen-reaktiven Komponente in Reaktion gebracht werden. Dabei ist es bevorzugt, wenn die Phosgen-reaktive Komponente eine organische Verbindung darstellt, bevorzugt mindestens ein organischer Alkohol oder mindestens ein organisches Amin, insbesondere mindestens eine organische Verbindung mit mindestens zwei Hydroxylgruppen oder mindestens eine organische Verbindung mit mindestens zwei Aminogruppen, besonders bevorzugt mindestens ein organisches Diol oder mindestens ein organisches Diamin.

Bei Durchführung des Schrittes b) des erfindungsgemäßen Verfahrens wird im Reaktionsraum eine Zusammensetzung mit mehreren Phasen genutzt, die ebenfalls ein Gegenstand dieser Erfindung ist. Die in Schritt b) im Reaktionsraum vorliegende Zusammensetzung ist eine Zusammensetzung mit mindestens zwei Phasen, enthaltend als erste Phase ein Gas, enthaltend Kohlenstoffmonoxid, sowie als eine davon verschiedene weitere Phase mindestens eine Polychlor-Anion haltige Komponente, bevorzugt in Form einer ionischen Flüssigkeit. Die Polychlor-Anion haltige Komponente ist eine Komponente, enthaltend eine Polychlor-Anion haltige Verbindung.

Mit zunehmender Reaktionsdauer ist ein Anstieg des Phosgengehaltes, insbesondere in der ersten Phase, zu verzeichnen, so dass eine erfindungsgemäß bevorzugte Zusammensetzung sich dadurch kennzeichnet, dass sie mindestens zwei Phasen umfasst, enthaltend als erste Phase ein Gas, enthaltend Kohlenstoffmonoxid, Phosgen und bezogen auf das Gewicht der Phase weniger als 5 Gew.-% Chlor, bevorzugt weniger als 3 Gew.-%, besonders bevorzugt weniger als 2 Gew.-%, sowie als eine davon verschiedene Phase mit mindestens einer Monochlor-Anion haltigen Komponente.

Wird in Schritt b) des erfindungsgemäßen Verfahrens im Rahmen einer Ausführungsform mindestens ein organisches Lösungsmittel eingesetzt, so kann dieses mindestens eine organische Lösungsmittel Teil der vorgenannten weiteren Phase sein (z.B. Polychlor-Anion haltige Komponente löst sich in dem mindestens einen organischen Lösungsmittel) oder eine separate flüssige Phase ausbilden. Bevorzugt geeignet ist eine Zusammensetzung mit mindestens zwei Phasen, enthaltend als erste Phase gasförmiges Kohlenstoffmonoxid, sowie als eine davon verschiedene Phase mindestens eine Polychlor-Anion haltige Komponente, bevorzugt in Form einer ionischen Flüssigkeit, dadurch gekennzeichnet, dass die Zusammensetzung zusätzlich mindestens ein organisches Lösungsmittel enthält.

Insbesondere wird bei fortschreitender Reaktion im Schritt b) des erfindungsgemäßen Verfahrens in der Reaktionszone eine Zusammensetzung erhalten, enthaltend Phosgen, mindestens eine ionische, organische, Monochlor-Anion haltige Verbindung und mindestens ein organisches Lösungsmittel. Dabei liegt bevorzugt das in der Zusammensetzung enthaltene Phosgen in dem mindestens einen organischen Lösungsmittel gelöst vor, wobei die mindestens eine ionische, organische, Monochlor-Anion haltige Verbindung zumindest teilweise in dem mindestens einen organischen Lösungsmittel gelöst ist. Es ist wiederum besonders bevorzugt, wenn das in der Zusammensetzung enthaltene Phosgen in dem mindestens einen organischen Lösungsmittel gelöst vorliegt und eine flüssige Phase bildet, wobei die mindestens eine ionische, organische, Monochlor-Anion haltige Verbindung zumindest teilweise als feste Phase vorliegt.

Ausführungsformen von Merkmalen des Verfahrens, die ebenso Merkmale der Zusammensetzung sind, sowie deren bevorzugten Ausgestaltungen, sind ebenfalls Ausführungsformen oder bevorzugte Ausgestaltungen der Zusammensetzung, insbesondere mit Blick auf die Merkmale der Polychlor-Anion haltigen Komponente (Polychlor-Anion haltigen Verbindung), des Lösungsmittels, der ionischen, organischen, Monochlor-Anion haltigen Verbindung.

Folgende Aspekte 1 bis 26 verdeutlichen die Erfindung, ohne sie darauf zu beschränken:
1. Verfahren zur Herstellung von Phosgen, umfassend mindestens die Schritte
   a) Bereitstellung eines Reaktionsraumes, enthaltend eine Komponente mit mindestens einer Polychlor-Anion haltigen Verbindung, bevorzugt mindestens einer Polychlor-Anion haltigen Verbindung in Form einer ionischen Flüssigkeit,
   b) Kontaktieren von Kohlenstoffmonoxid mit der besagten Komponente im Reaktionsraum und dortige Umsetzung des Kohlenstoffmonoxids unter Bildung von Phosgen-haltigem Produkt,
   c) gegebenenfalls Sammlung des Phosgens aus dem Phosgen-haltigen Produkt des Schritts b),
   d) gegebenenfalls Umsetzung des Phosgens aus dem Phosgen-haltigen Produkt des Schritts b) oder des gesammelten Phosgens aus Schritt c) mit einer Phosgen-reaktiven Komponente,
   mit der Maßgabe, dass das in Schritt b) gebildete Phosgen-haltige Produkt bezogen auf dessen Gesamtgewicht weniger als 5,0 Gew.-% Cl₂, bevorzugt weniger als 3,0 Gew.-% Cl₂, besonders bevorzugt weniger als 2,0 Gew.-% Cl₂, enthält.
2. Verfahren gemäß Aspekt 1, dadurch gekennzeichnet, dass die besagte Komponente aus Schritt a) mindestens eine Polychlor-Anion haltige Verbindung umfasst, wobei deren Kation ausgewählt wird aus der Gruppe einer oder mehrerer jeweils unterschiedlich alkyl- und/oder aryl- substituierter Kationen ausgewählt aus Ammonium-, Phosphonium-, Sulfonium-, Imidazolium-, Pyridinium- oder Guanidiniumkationen oder Mischungen daraus (bevorzugt aus der Gruppe der jeweils unterschiedlich alkyl- und/oder aryl-substituierten Ammoniumkationen oder Phosphoniumkationen) und das Polychlor-Anion Cl₍ᵣ₊₂₎⁻ enthalten ist, worin r für eine ungerade ganze Zahl von 1 bis 7, bevorzugt für 1 oder 3, steht.
3. Verfahren nach einem der vorangehenden Aspekte, dadurch gekennzeichnet, dass die Komponente aus Schritt a) mindestens eine Polychlor-Anion haltige Verbindung der Formel (III) oder der Formel (IV) oder einem Gemisch daraus enthält,

   N-R¹ₘR²ₙR³ₒ⁺ Cl₍ᵣ₊₂₎⁻ (III)

   P-R⁴ₚR⁵_{q}⁺ Cl₍ₛ₊₂₎⁻ (IV)

   in denen
   die Reste R¹, R², R³, R⁴ und R⁵ unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, oder n-Propyl, bedeuten,
      mit der Maßgabe, dass mindestens ein Rest aus R¹, R² oder R³ von den jeweils anderen Resten R¹, R² und R³ verschieden ist und die Reste R⁴ und R⁵ voneinander verschieden sind,
   m, n, o, p und q unabhängig voneinander für eine ganze Zahl aus der Reihe von 0 bis 3 stehen, wobei die Summe von m+n+o und die Summe von p+q die Zahl 4 ergeben muss,
   wobei r und s unabhängig voneinander für eine ungerade ganze Zahl von 1 bis 7, bevorzugt r und s unabhängig voneinander für 1 oder 3, stehen.
4. Verfahren gemäß Aspekt 3, dadurch gekennzeichnet, dass gemäß Verbindung der allgemeinen Formel (III) m und n für eine Zahl 1, 2 oder 3, und o für die 0 stehen.
5. Verfahren gemäß Aspekt 3, dadurch gekennzeichnet, dass die Verbindung der Formel (III) oder (IV) ausgewählt ist aus wenigstens einer Verbindung der Reihe: NEtMe₃Cl₍ᵣ₊₂₎, NEt₂Me₂Cl₍ᵣ₊₂₎, NEt₃MeCl₍ᵣ₊₂₎, NBuEt₂MeCl₍ᵣ₊₂₎, NMePr₃Cl₍ᵣ₊₂₎, NBu₂Me₂Cl₍ᵣ₊₂₎, PEt₃MeCl₍ᵣ₊₂₎, wobei die Kürzel Me, Et, Pr, Bu für Methyl, Ethyl, n-Propyl und n-Butyl stehen,, worin r die in Anspruch 3 definierte Bedeutung hat.
6. Verfahren gemäß Aspekt 3, dadurch gekennzeichnet, dass die Verbindung der Formel (III) insbesondere ausgewählt ist aus wenigstens einer Verbindung der Reihe: NEtMe₃Cl₍ᵣ₊₂₎, NEt₂Me₂Cl₍ᵣ₊₂₎, NEt₃MeCl₍ᵣ₊₂₎, worin r die in Anspruch 3 definierte Bedeutung hat.
7. Verfahren gemäß einem der Aspekte 2 bis 6, dadurch gekennzeichnet, das die Polychlor-Anion haltige Verbindung durch Umsetzung von Chlor (Ch) mit mindestens einer ionischen organischen Verbindung erhalten wird, wobei das Kation der ionischen organischen Verbindung ausgewählt wird aus der Gruppe einer oder mehrerer jeweils unterschiedlich alkyl- und/oder aryl- substituierter Kationen ausgewählt aus Ammonium-, Phosphonium-, Sulfonium-, Imidazolium-, Pyridinium- oder Guanidiniumkationen oder Mischungen daraus (bevorzugt aus der Gruppe der jeweils unterschiedlich alkyl- und/oder aryl-substituierten Ammoniumkationen oder Phosphoniumkationen) und das Anion der ionischen organischen Verbindung Monochlorid ist.
8. Verfahren gemäß einem der vorangehenden Aspekte, wobei besagte Komponente des Schrittes
   a) bezogen auf das Gesamtgewicht dieser Komponente mindestens 50 Gew.-%, bevorzugt mindestens 75 Gew.-%, ganz besonders bevorzugt mindestens 90 Gew.-%, Verbindungen mit Polychlor-Anion enthält.
9. Verfahren gemäß einem der vorangehenden Aspekte, dadurch gekennzeichnet, dass das Stoffmengenverhältnis der in Schritt b) für die Umsetzung bereitgestellten gesamten Menge an Kohlenstoffmonoxid zur in Schritt a) bereitgestellten Polychlor-Anion haltigen Verbindung (i.e. Stoffmenge von Kohlenstoffmonoxid dividiert durch Stoffmenge eingesetzter Polychlor-Anion haltiger Verbindung) mindestens 1, bevorzugt größer 1, besonders bevorzugt größer 1.25, ganz besonders bevorzugt größer 1.5, ist.
10. Verfahren gemäß einem der vorangehenden Aspekte, dadurch gekennzeichnet, dass das Stoffmengenverhältnis der in Schritt b) für die Umsetzung bereitgestellten gesamten Menge an Kohlenstoffmonoxid zur in Schritt a) bereitgestellten Polychlor-Anion haltigen Verbindung höchstens 100, bevorzugt höchstens 50, besonders bevorzugt höchstens 25, ganz besonders bevorzugt höchstens 10, am bevorzugtesten höchstens 5, ist
11. Verfahren gemäß einem der vorangehenden Aspekte, dadurch gekennzeichnet, dass der Schritt b) bei Temperaturen < 500 °C, bevorzugt <250 °C, weiter bevorzugt < 150°C, besonders bevorzugt bei < 100 °C, weiter bevorzugt < 80°C, ganz besonders bevorzugt < 50 °C, am bevorzugtesten < 30 °C, durchgeführt wird.
12. Verfahren gemäß einem der vorangehenden Aspekte, dadurch gekennzeichnet, dass die flüssige Komponente des Schritts a) zusätzlich mindestens ein flüssiges, organisches Lösungsmittel als flüssige Zusammensetzung enthält, in der sich die besagte Polychlor-Anion haltige Verbindung einarbeiten lässt, unter Erhalt einer Lösung oder Dispersion.
13. Verfahren gemäß einem der vorangehenden Aspekte, dadurch gekennzeichnet, dass in Schritt b) das Kohlenstoffmonoxid in den Reaktionsraum eingebracht wird, so dass der Innendruck des Reaktionsraumes höher ist als der Atmosphärendruck, und das Kohlenstoffmonoxid mit der besagten Komponente kontaktiert wird.
14. Verfahren gemäß einem der vorangehenden Aspekte, dadurch gekennzeichnet, dass Schritt d) ausgeführt wird und dabei im besagten Reaktionsraum das Phosgen des in Schritt b) gebildeten Phosgen-haltigen Produkts mit mindestens einer Phosgen-reaktiven Komponente in Reaktion gebracht wird.
15. Verfahren gemäß Aspekt 14 dadurch gekennzeichnet, dass die Phosgen-reaktive Komponente eine organische Verbindung darstellt, bevorzugt mindestens ein organischer Alkohol oder mindestens ein organisches Amin, insbesondere mindestens eine organische Verbindung mit mindestens zwei Hydroxylgruppen oder mindestens eine organische Verbindung mit mindestens zwei Aminogruppen, besonders bevorzugt mindestens ein organisches Diol oder mindestens ein organisches Diamin.
16. Verfahren gemäß einem der vorangehenden Aspekte, dadurch gekennzeichnet, dass das in Schritt b) gebildete Phosgen-haltige Produkt in die Gasphase übergeht und während der Umsetzung des Kohlenstoffmonoxids an der besagten Komponente im Reaktionsraum verbleibt.
17. Verfahren gemäß einem der vorangehenden Aspekte, dadurch gekennzeichnet, dass das in Schritt b) gebildete Phosgen-haltige Produkt aus dem Reaktionsraum herausgeführt wird und das darin enthaltene in Schritt b) gebildete Phosgen in Schritt c) außerhalb des Reaktionsraumes gesammelt wird, bevorzugt durch Kondensation oder durch Lösung in einer flüssigen Zusammensetzung, enthaltend organisches Lösungsmittel.
18. Verfahren gemäß einem der vorangehenden Aspekte, dadurch gekennzeichnet, dass das in Schritt b) gebildete Phosgen des Phosgen-haltigen Produktes in Schritt c) in einer flüssigen Zusammensetzung, enthaltend organisches Lösungsmittel, gelöst und dadurch gesammelt wird, wobei die besagte flüssige Zusammensetzung im Reaktionsraum ist.
19. Verfahren gemäß einem der Aspekte 1 bis 18, dadurch gekennzeichnet, dass im Reaktionsraum neben besagter Komponente eine flüssige Zusammensetzung in Form einer flüssigen Phase, enthaltend organisches Lösungsmittel, vorliegt, wobei besagte flüssige Phase mit besagter Komponente in Kontakt steht.
20. Verfahren gemäß einem der Aspekte 12, 17 bis 19, dadurch gekennzeichnet, dass die besagte flüssige Zusammensetzung bezogen auf deren Gesamtgewicht eine Gesamtmenge von mindestens 50 Gew.-%, bevorzugt mindestens 75 Gew.-%, ganz besonders bevorzugt mindestens 90 Gew.-%, organisches Lösungsmittel enthält.
21. Verfahren gemäß einem der Aspekte 12, 17 bis 20, dadurch gekennzeichnet, dass in der flüssigen Zusammensetzung mindestens ein aprotisches, organisches Lösungsmittel, ausgewählt aus 1,2-Dichlorbenzol, 1,4-Dichlorbenzol, Monochlorbenzol, Fluorbenzol, 1,2-Difluorbenzol, Dichlormethan oder Mischungen daraus, enthalten ist.
22. Verfahren gemäß einem der Aspekte 12, 17 bis 21, dadurch gekennzeichnet, dass in der flüssigen Zusammensetzung mindestens ein organisches Lösungsmittel enthalten ist, in dem sich Phosgen bei 20°C und 1013 mbar zu mindestens 1 g/L löst, bevorzugt zu mindestens 100 g/L löst, besonders bevorzugt zu mindestens 250 g/L löst.
23. Verfahren gemäß einem der Aspekte 12, 18 bis 22, dadurch gekennzeichnet, dass die besagte flüssige Zusammensetzung derart ausgewählt ist, dass sich die Polychlor-Anion haltige Verbindung darin bei 20°C und 1013 mbar zu weniger als 0,1 g/L, insbesondere zu weniger als 0,01 g/L, löst.
24. Verfahren gemäß einem der Aspekte 12, 17 bis 23, dadurch gekennzeichnet, dass die besagte flüssige Zusammensetzung derart ausgewählt ist, dass sich die ionische organische Verbindung NMeEt₃Cl darin bei 20°C und 1013 mbar zu weniger als 0,1 g/L, insbesondere zu weniger als 0,05 g/L, löst.
25. Zusammensetzung mit mindestens zwei Phasen, enthaltend als erste Phase gasförmiges Kohlenstoffmonoxid, sowie als eine davon verschiedene Phase mindestens eine Polychlor-Anion haltige Komponente, bevorzugt in Form einer ionischen Flüssigkeit, dadurch gekennzeichnet, dass die Zusammensetzung zusätzlich mindestens ein organisches Lösungsmittel enthält.
26. Zusammensetzung nach Aspekt 25, dadurch gekennzeichnet, dass besagtes organisches Lösungsmittel als weitere zusätzliche Phase in Form mindestens einer flüssigen Phase vorliegt.
27. Zusammensetzung mit mindestens einer Phase, enthaltend Phosgen, mindestens eine ionische, organische, Monochlor-Anion-haltige Verbindung und mindestens ein organisches Lösungsmittel.

### Beispiele

### Synthese von Phosgen aus [NEt₃Me][Cl₃₋₇] und CO enthaltend organisches Lösungsmittel

o-Dichlorbenzol (oDCB, 20 mL) und [NEt₃Me][Clₓ] (x = 3-7, x(gemittelt) = 3,95, 3,90 g, 15.3 mmol) wurden in einem Reaktor mit Diffusor und Ablasshahn vorgelegt. Der Reaktor wurde mit einer Peristaltikpumpe sowie einem IR- und UV/Vis Spektrometer zu einem Kreislauf verbunden. Das System wurde mit einem Überschuss CO (32 mmol) gespült. Die Gasphase wurde bis zu 7 Stunden durch das System aus oDCB und [NEt₃Me][Clₓ] gepumpt und die Gasphase alle 5 Minuten per IR- und UV/Vis Spektroskopie charakterisiert. In den IR-Spektren wurde die Bildung von Phosgen beobachtet ersichtlich durch die stetige Abnahme der charakteristischen Absorptionsbande für CO bei 2171 cm⁻¹ sowie die Zunahme der für Phosgen charakteristischen Absorptionsbande bei 1682 cm⁻¹. Dies ist im Einklang mit der im UV/Vis Spektrum zu beobachtenden stetigen Abnahme der charakteristischen Absorptionsbande für Cl₂ bei 330 nm sowie der Zunahme der Absorptionsbande des Phosgens bei 231 nm. Anschließend wurde eine oDCB Phase über den Ablasshahn in einen Reaktionsbehälter überführt. Die Anwesenheit des gebildeten Phosgens in der Gasphase des oDCB enthaltenden Reaktionsbehälters wurde mittels IR-Spektroskopie bestätigt. Im IR-Spektrum wurden ausschließlich die für Phosgen charakteristischen Banden bei v = 3632(vw) cm⁻¹, 1826(s) cm⁻¹, 1626(w) cm⁻¹, 1409(vw) cm⁻¹, 1107(w) cm⁻¹, 851(vs) cm⁻¹ und 571(w) cm⁻¹ beobachtet. Die Phosgen haltige oDCB Lösung kann nun direkt für Phosgenierungsreaktionen - insbesondere für die Phosgenierung von Aminen und Alkoholen zu Isocyanaten und Carbonaten verwendet werden.

### Synthese von Phosgen aus [NEt₃Me][Cl₃₋₇] und CO

[NEt₃Me][Clₓ] (x = 3-7, x(gemittelt) = 3,9, 3,8 g, 15.0 mmol) wurde in einen Reaktor und dessen Gasphase mit CO (0.171 mg, 6.0 mmol) befüllt. Anschließend wurde die Reaktion für 4 Tage bei 35°C gerührt, um das CO mit [NEt₃Me][Clₓ] zu Phosgen umzusetzen. Die Bildung von Phosgen wurde nach Beendigung der Reaktion mittels IR-Spektroskopie eindeutig nachgewiesen (v = 3632(vw) cm⁻¹, 1826(s) cm⁻¹, 1626(w) cm⁻¹, 1409(vw) cm⁻¹, 1107(w) cm⁻¹, 851(vs) c^{m-1} und 571(w) c^{m-1}; Umsatz ≈ 96% basierend auf die eingesetzte CO Menge). Das Phosgen kann nun direkt für Phosgenierungsreaktionen - insbesondere für die Phosgenierung von Aminen und Alkoholen zu Isocyanaten und Carbonaten verwendet werden.

### Synthese von Phenylisocyanat aus [NEt₃Me][Cl₃₋₇], CO und Phenylamin

In ein Gemisch aus *o*-Dichlorbenzol (20 mL) und [NEt₃Me][Clₓ] (x = 3-7, x(gemittelt) = -3.2, -0,57 g, 2,42 mmol) wurde ein Überschuss an CO eingeleitet. Das Reaktionsgemisch wurde bei Raumtemperatur gerührt bis das [NEt₃Me][Clₓ] vollständig umgesetzt war. Die resultierende Suspension wurde auf -15°C gekühlt, mit Anilin (0,51 g, 5,48 mmol) in *o-*Dichlorbenzol (5 mL) tropfenweise versetzt und 8 Stunden auf 100 °C gerührt. Das Reaktionsprodukt wurde mittels IR Spektroskopie untersucht und wies die für Phenylisocyanat charakteristische Bande bei v = 2273 cm⁻¹ auf.

## Patentansprüche

1. Verfahren zur Herstellung von Phosgen, umfassend mindestens die Schritte
a) Bereitstellung eines Reaktionsraumes, enthaltend eine Komponente mit mindestens einer Polychlor-Anion haltigen Verbindung, bevorzugt mindestens einer Polychlor-Anion haltigen Verbindung in Form einer ionischen Flüssigkeit,
b) Kontaktieren von Kohlenstoffmonoxid mit der besagten Komponente im Reaktionsraum und dortige Umsetzung des Kohlenstoffmonoxids unter Bildung von Phosgen-haltigem Produkt,
c) gegebenenfalls Sammlung des Phosgens aus dem Phosgen-haltigen Produkt des Schritts b),
d) gegebenenfalls Umsetzung des Phosgens aus dem Phosgen-haltigen Produkt des Schritts b) oder des gesammelten Phosgens aus Schritt c) mit einer Phosgen-reaktiven Komponente,
mit der Maßgabe, dass das in Schritt b) gebildete Phosgen-haltige Produkt bezogen auf dessen Gesamtgewicht weniger als 5,0 Gew.-% Ch, bevorzugt weniger als 3,0 Gew.-% Cl₂, besonders bevorzugt weniger als 2,0 Gew.-% Cl₂, enthält.

2. Verfahren gemäß Anspruch 1, **dadurch gekennzeichnet, dass** die besagte Komponente aus Schritt a) mindestens eine Polychlor-Anion haltige Verbindung umfasst, wobei deren Kation ausgewählt wird aus der Gruppe einer oder mehrerer jeweils unterschiedlich alkyl- und/oder aryl- substituierter Kationen ausgewählt aus Ammonium-, Phosphonium-, Sulfonium-, Imidazolium-, Pyridinium- oder Guanidiniumkationen oder Mischungen daraus (bevorzugt aus der Gruppe der jeweils unterschiedlich alkyl- und/oder aryl-substituierten Ammoniumkationen oder Phosphoniumkationen) und das Polychlor-Anion Cl₍ᵣ₊₂₎⁻ enthalten ist, worin r für eine ungerade ganze Zahl von 1 bis 7, bevorzugt für 1 oder 3, steht.

3. Verfahren nach einem der vorangehenden Ansprüche, **dadurch gekennzeichnet, dass** die Komponente aus Schritt a) mindestens eine Polychlor-Anion haltige Verbindung der Formel (III) oder der Formel (IV) oder einem Gemisch daraus enthält,
N-R¹ₘR²ₙR³ₒ⁺ Cl₍ᵣ₊₂₎⁻ (III)
P-R⁴ₚR⁵_{q}⁺ Cl₍ₛ₊₂₎- (IV)
in denen
die Reste R¹, R², R³, R⁴ und R⁵ unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, oder n-Propyl, bedeuten,
mit der Maßgabe, dass mindestens ein Rest aus R¹, R² oder R³ von den jeweils anderen Resten R¹, R² und R³ verschieden ist und die Reste R⁴ und R⁵ voneinander verschieden sind,
m, n, o, p und q unabhängig voneinander für eine ganze Zahl aus der Reihe von 0 bis 3 stehen, wobei die Summe von m+n+o und die Summe von p+q die Zahl 4 ergeben muss,
wobei r und s unabhängig voneinander für eine ungerade ganze Zahl von 1 bis 7, bevorzugt r und s unabhängig voneinander für 1 oder 3, stehen.

4. Verfahren gemäß Anspruch 3, **dadurch gekennzeichnet, dass** die Verbindung der Formel (III) oder (IV) ausgewählt ist aus wenigstens einer Verbindung der Reihe: NEtMe₃Cl₍ᵣ₊₂₎, NEt₂Me₂Cl₍ᵣ₊₂₎, NEt₃MeCl₍ᵣ₊₂₎, NBuEt₂MeCl₍ᵣ₊₂₎, NMePr₃Cl₍ᵣ₊₂₎, NBu₂Me₂Cl₍ᵣ₊₂₎, PEt₃MeCl₍ᵣ₊₂₎, wobei die Kürzel Me, Et, Pr, Bu für Methyl, Ethyl, n-Propyl und n-Butyl stehen, , worin r die in Anspruch 3 definierte Bedeutung hat.

5. Verfahren gemäß einem der vorangehenden Ansprüche, wobei besagte Komponente des Schrittes a) bezogen auf das Gesamtgewicht dieser Komponente mindestens 50 Gew.-%, bevorzugt mindestens 75 Gew.-%, ganz besonders bevorzugt mindestens 90 Gew.-%, Verbindungen mit Polychlor-Anion enthält.

6. Verfahren gemäß einem der vorangehenden Ansprüche, **dadurch gekennzeichnet, dass** das Stoffmengenverhältnis der in Schritt b) für die Umsetzung bereitgestellten gesamten Menge an Kohlenmonoxid zur in Schritt a) bereitgestellten Polychlor-Anion haltigen Verbindung (i.e. Stoffmenge von Kohlenstoffmonoxid dividiert durch Stoffmenge eingesetzter Polychlor-Anion haltiger Verbindung) mindestens 1, bevorzugt größer 1, besonders bevorzugt größer 1.25, ganz besonders bevorzugt größer 1.5, ist.

7. Verfahren gemäß einem der vorangehenden Ansprüche, **dadurch gekennzeichnet, dass** das Stoffmengenverhältnis der in Schritt b) für die Umsetzung bereitgestellten gesamten Menge an Kohlenstoffmonoxid zur in Schritt a) bereitgestellten Polychlor-Anion haltigen Verbindung höchstens 100, bevorzugt höchstens 50, besonders bevorzugt höchstens 25, ganz besonders bevorzugt höchstens 10, am bevorzugtesten höchstens 5, ist

8. Verfahren gemäß einem der vorangehenden Ansprüche, **dadurch gekennzeichnet, dass** der Schritt b) bei Temperaturen < 500 °C, bevorzugt <250 °C, weiter bevorzugt < 150°C, besonders bevorzugt bei < 100 °C, weiter bevorzugt < 80°C, ganz besonders bevorzugt < 50 °C, am bevorzugtesten < 30 °C, durchgeführt wird.

9. Verfahren gemäß einem der vorangehenden Ansprüche, **dadurch gekennzeichnet, dass** die flüssige Komponente des Schritts a) zusätzlich mindestens ein flüssiges, organisches Lösungsmittel als flüssige Zusammensetzung enthält, in der sich die besagte Polychlor-Anion haltige Verbindung einarbeiten lässt, unter Erhalt einer Lösung oder Dispersion.

10. Verfahren gemäß einem der vorangehenden Ansprüche, **dadurch gekennzeichnet, dass** in Schritt b) das Kohlenstoffmonoxid in den Reaktionsraum eingebracht wird, so dass der Innendruck des Reaktionsraumes höher ist als der Atmosphärendruck, und das Kohlenstoffmonoxid mit der besagten Komponente kontaktiert wird.

11. Verfahren gemäß einem der vorangehenden Ansprüche, **dadurch gekennzeichnet, dass** Schritt d) ausgeführt wird und dabei im besagten Reaktionsraum das Phosgen des in Schritt b) gebildeten Phosgen-haltigen Produkts mit mindestens einer Phosgen-reaktiven Komponente in Reaktion gebracht wird.

12. Verfahren gemäß einem der vorangehenden Ansprüche, **dadurch gekennzeichnet, dass** das in Schritt b) gebildete Phosgen-haltige Produkt in die Gasphase übergeht und während der Umsetzung des Kohlenstoffmonoxids an der besagten Komponente im Reaktionsraum verbleibt.

13. Verfahren gemäß einem der vorangehenden Ansprüche, **dadurch gekennzeichnet, dass** das in Schritt b) gebildete Phosgen-haltige Produkt aus dem Reaktionsraum herausgeführt wird und das darin enthaltene in Schritt b) gebildete Phosgen in Schritt c) außerhalb des Reaktionsraumes gesammelt wird, bevorzugt durch Kondensation oder durch Lösung in einer flüssigen Zusammensetzung, enthaltend organisches Lösungsmittel.

14. Verfahren gemäß einem der vorangehenden Ansprüche, **dadurch gekennzeichnet, dass** das in Schritt b) gebildete Phosgen des Phosgen-haltigen Produktes in Schritt c) in einer flüssigen Zusammensetzung, enthaltend organisches Lösungsmittel, gelöst und dadurch gesammelt wird, wobei die besagte flüssige Zusammensetzung im Reaktionsraum ist.

15. Verfahren gemäß einem der Ansprüche 1 bis 14, **dadurch gekennzeichnet, dass** im Reaktionsraum neben besagter Komponente eine flüssige Zusammensetzung in Form einer flüssigen Phase, enthaltend organisches Lösungsmittel, vorliegt, wobei besagte flüssige Phase mit besagter Komponente in Kontakt steht.

16. Verfahren gemäß einem der Ansprüche 9, 13 bis 15, **dadurch gekennzeichnet, dass** die besagte flüssige Zusammensetzung bezogen auf deren Gesamtgewicht eine Gesamtmenge von mindestens 50 Gew.-%, bevorzugt mindestens 75 Gew.-%, ganz besonders bevorzugt mindestens 90 Gew.-%, organisches Lösungsmittel enthält.

17. Verfahren gemäß einem der Ansprüche 9, 13 bis 16, **dadurch gekennzeichnet, dass** in der flüssigen Zusammensetzung mindestens ein organisches Lösungsmittel enthalten ist, in dem sich Phosgen bei 20°C und 1013 mbar zu mindestens 1 g/L löst, bevorzugt zu mindestens 100 g/L löst, besonders bevorzugt zu mindestens 250 g/L löst.

18. Zusammensetzung mit mindestens zwei Phasen, enthaltend als erste Phase gasförmiges Kohlenstoffmonoxid, sowie als eine davon verschiedene Phase mindestens eine Polychlor-Anion haltige Komponente, bevorzugt in Form einer ionischen Flüssigkeit, **dadurch gekennzeichnet, dass** die Zusammensetzung zusätzlich mindestens ein organisches Lösungsmittel enthält.

19. Zusammensetzung mit mindestens einer Phase, enthaltend Phosgen, mindestens eine ionische, organische, Monochlor-Anion-haltige Verbindung und mindestens ein organisches Lösungsmittel.
